# EUROPEAN PATENT SPECIFICATION

(11) **EP 0 958 747 B1**
(45) Date of publication and mention of the grant of the patent: **03.11.2004**
(21) Application number: 98401124.7
(22) Date of filing: 11.05.1998
(51) Int. Cl.: A23G 1/00

(54) **Chocolate formulation process**
Formulierungsverfahren für Schokolade
Procédé de formulation de chocolat

(43) Date of publication of application: 24.11.1999
(73) Proprietor: Doveurope S.A., 67790 Steinbourg (FR)
(72) Inventor: Hoenen, Eric Joseph, c/o Doveurope S.A., 67790 Steinbourg (FR)
(74) Representative: Cornish, Kristina Victoria Joy

(56) References cited:
- EP-A- 0 393 327
- EP-A- 0 401 427
- EP-B- 0 189 469
- US-A- 5 185 175
- US-A- 5 425 957
- US-A- 5 527 556
- DATABASE WPI Section Ch, Week 8442 Derwent Publications Ltd., London, GB; Class D13, AN 84-259182 XP002081944 -& JP 59 156246 A (FUJI OIL CO LTD) , 5 September 1984
- PATENT ABSTRACTS OF JAPAN vol. 017, no. 086 (C-1028), 19 February 1993 & JP 04 281744 A (KANEBO LTD), 7 October 1992

## Description

The present invention relates to a process for the preparation of an edible confectionery composition, particularly a chocolate formulation, to compositions preparable by the process and to intermediate formulations of prior to final processing into a confectionery composition.

Conventional chocolate production and processing methods avoid contact with water since small amounts of added water cause severe rheological changes in the product, usually accompanied by lumping and/or granulation leading to a coarse unacceptable eating texture (Minifie, B. W. *Chocolate, Cocoa and Confectionery - Science and Technology*, 3^{rd} edition, Chapman & Hall (1989)). On the contrary, addition of larger quantities of water, usually in the form of fresh cream or full cream milk, results in the production of "*ganache*" which is conventionally used as a short shelf-life filling for truffles or as a topping for confections. Ganache is the confectioner's term for a phase-inverted (i.e. oil-in-water) chocolate preparation. Ganache has a smooth, glossy texture and appearance, and a rich chocolate or milk chocolate taste. A ganache may also be produced from white chocolate in a similar way. Typical moisture contents for ganache from 10-40% w/w. A ganache cannot be utilised in processing in the same way as conventional chocolate and its soft texture characteristics render it unsuitable for the majority of enrobing, moulding or pan-coating operations.

Attempts to generate a water-in-oil phase system in chocolate at even very low water contents (e.g. 0.5-2.0% w/w) have presented particular challenges which have been addressed in a variety of ways. The addition of small quantities of water, up to 2%, into chocolate has been investigated as a means of providing improved heat stability by protecting against melt and deformation of moulded or enrobed chocolate products. The method by which the small quantity of water is introduced varies, for example, by direct absorption of water vapour or by the use of specially prepared emulsions.

At intermediate levels of water content, i.e. from 2-20% w/w, a number of processes have been reported which attempt to retain popular eating characteristics of chocolates and the processing advantages of a stable water-in-oil system, whilst offering cost reductions in formulations. For example, US-A-4446166 describes a chocolate composition for use in the preparation of a heat resistant chocolate product comprising a chocolate mass containing cocoa butter, sugar, milk solids and cocoa solids. A water-in-oil emulsion is added in a proportion of 2-10% of the total ingredients, at least a portion of the fat being in solid form. A milk chocolate containing 1-16% water is reported in US-A-5468509 in which the chocolate preparation is produced by mixing cocoa butter with cocoa ingredients in the presence of an edible emulsifier so that the ingredients are thoroughly coated with cocoa butter. This mixture is then blended with an aqueous solution of water, sweetener and milk solids using minimal mixing to give a uniform mixture without resulting in conching or high viscosity, followed by tempering at 27-32°C.

EP 0393327 describes a process of providing a heat resistance chocolate by mixing water in oil emulsion and chocolate. JP 59156246A and US 5527556 disclose a chocolate having a moisture content of 1.5% to 5% and 2.5%, respectively.

The process described in EP 0401427 requires the use of cream and in addition an emulsifier. US 5425957 describes a complex process requiring a number of steps to produce low-calorie chocolate.

US-A-2760867 describes a process for the preparation of a solidified chocolate product which is stable above the melting point of cocoa butter which comprises cocoa butter, sugar, milk solids and an emulsifier with a moisture content of 1-3% water. The water is absorbed by the non-fat milk solids in which the water-swollen non-fat milk solids are at least partially joined and interboned so as to render the product self-sustaining at temperatures above the melting point of the cocoa butter. CH-A-399891 also describes a heat-resistant chocolate comprising one part of non-conched chocolate with amorphous sugar and a second part of standard conched chocolate with the sugar in a crystallised form. The chocolate is reported to be resistant up to 35°C and represents a preparation which is a crystallisation of sugar and cocoa butter.

EP-A-0800770 relates to a process for the preparation of chocolate by mixing chocolate and an emulsion of a gelling or a thickening agent in water using an extruder under conditions of high shear. The finished composition is a highly viscous gum product which cannot be used to enrobe confectionery products and cannot be moulded as a chocolate confectionery product.

These approaches have, however, not proved to be cost-effective or have brought about significant undesirable changes in eating texture. There remains a need therefore to provide a means to incorporate water into chocolate to generate cost-effective, reduced calorie formulations which retain high consumer acceptance and the ability to be readily processed into finished confectionery product.

It has now been surprisingly discovered that a chocolate formulation with a high moisture content can be prepared by incorporating a concentrated sugar syrup into the formulation.

According to a first aspect of the present invention, there is provided a method for the preparation of a water-in-oil phase chocolate formulation, the method comprising the step of admixing a concentrated sugar syrup to a chocolate fat phase with a fat content of at least 25% w/w under conditions of low shear at a temperature of from 30°C to 55°C wherein the viscosity of the sugar syrup is from 500 cps to 140,000cps measured at 20°C with a Brookfield Digital Viscometer, and the sugar syrup having a solids content of at least 70% w/w and wherein the final moisture content of the chocolate formulation is from 8% to 20% w/w.

Methods in accordance with the present invention may be used to prepare a chocolate formulation which corresponds to the generally known classifications of chocolate confectionery of "white", "plain" or "dark", or "milk". The classification depends upon the amount of cocoa solids present in the formulation and the European Union definitions are as follows: plain chocolate has a high percentage of cocoa solids (minimum 30%, and not less than 12% dry, non-fat cocoa solids); milk chocolate may have a lower cocoa solids content (minimum 25%, and not less than 2.5% dry, non-fat cocoa solids) and white chocolate is prepared from cocoa butter (minimum 20%) and not less than 14% milk solids. Chocolate products and their reserved descriptions are defined in Europe in the "Cocoa and Chocolate Products" Directive No. 73/241 of 24 July 1973. A chocolate product is defined in the directive as being any product obtained from cocoa nib, cocoa mass, cocoa, fat-reduced cocoa or any combination of two or more thereof and sucrose, with or without the addition of extracted cocoa butter and containing not less than 35% total dry cocoa solids, including not less than 14% dry non-fat cocoa solids and not less than 18% permitted cocoa butter. However, in the context of the present invention, these definitions are not to be construed as being limiting and references to chocolate should be understood to include any preparation of dry cocoa solids, non-fat cocoa solids and cocoa butter.

The formulations prepared according to a method of the invention may also be compound coatings made from sugars, cocoa powder and/or milk solids, and/or cocoa liquor combined with vegetable fats other than cocoa butter. The final chocolate formulation may be used for coatings, moulded products or panned products in the same manner as conventional chocolate formulations, and may or may not be tempered before use.

The formulation may be an edible confectionery end-product in itself or may be further processed to produce such an end-product. The resulting product may be prepared for sale under ambient or low temperature conditions. Products for sale at low temperature conditions may typically comprise either "frozen" or "chilled" desserts or confectionery at a low temperature, such as for example of from -25°C to +15°C, suitably from -20°C to +5°C, to be consumed at an ambient temperature. Such low temperature products may include to ice cream (milk- or vegetable-fat based).

The chocolate formulation may also simply comprise a chocolate fat phase containing a total fat content of at least 25% w/w prior to admixing with the concentrated sugar syrup. Suitable ranges of total fat content are from 25% to 60% w/w or 25% to 45% w/w, preferably from 28% to 35% w/w. Such chocolate formulations may then be further processed into final confectionery products as desired. The final fat content range in the finished formulation may be at least 10% w/w, preferably in the range of from 15% to 45% w/w, suitably of from 25% to 35% w/w. According to the European Union Directive on the definition of chocolate the minimum fat level must be at least 25% w/w. However, this definition should not be construed as being limiting for the purposes of the present invention.

The water content in the formulation may be introduced directly, as part of the moisture content of one or more of the components in the formulation or in the form of an aqueous solution of one or more of the components in the formulation, such as for example from the juice of a fruit (untreated or reconstituted from concentrate).

The concentrated sugar syrup may comprise any suitable sugar syrup which has a viscosity from 500 cps to 140,000cps, suitably 1000-100,000, preferably 40,000 to 85,000 measured at 20°C and a solids content of at least 70% w/w, suitably in the range of 70% to 85% w/w, preferably 70% to 80% w/w. The viscosity is measured at 20°C with a Brookfield Digital Viscometer (spindle N3). Sugar syrups which can be used in a method in accordance with the present invention indude invert sugar, glucose syrup solids (42-95DE), golden syrup (partially inverted sucrose syrup), honey, polydextrose, maltodextrins, inulin (fructo-oligosaccharides) and mixtures thereof. Generally, monosaccharides, disaccharides, oligo- and/or polysaccharides syrups (at least three saccharide monomer units, branched or unbranched) may be used. It is preferred that the sugar syrups used do not crystallise from solution during the method of the present invention. The abbreviation DE refers to dextrose equivalents.

The admixing of components in a method according to the present invention takes place under conditions of low shear. Suitable mixing procedures therefore involve manual or mechanical stirring or mixing at low speeds, e.g. , with a suitable slow-speed mechanical stirrer. Appropriate mixing equipment includes planetary mixers equipped with a simple paddle blade, operated at slow speed, Z-blade trough mixers, and ribbon blenders. The temperature range for carrying out such a method is from 30°C to 55°C, suitably 35°C to 50°C, preferably 45°C.

The final moisture content of a chocolate formulation prepared by a method of the present invention is from 8% to 20% w/w, preferably, in the range of from 8% to 15% w/w, preferably 8% w/w or 10% w/w.

Methods of the present invention provide significant advantages over the previous attempts to introduce water into chocolate confectionery products as a water-in-oil system. The eventual products prepared by the method now described have improved microbiological stability, reduced calorie content and an acceptable eating texture when eaten from frozen or at ambient temperature. In connection with frozen products such as ice-cream, the eating texture of the finished product is very complementary with the ice-cream texture and flavour-release properties.

The microbiological stability of chocolate formulations prepared by the methods of the present invention are an important advantage. Foodstuffs with a high moisture content are at risk from the development of significant microbial (bacterial, yeast or fungal) growth leading to the product being unsuitable for sale or consumption. The actual determination of risk from microbial growth from moisture content is made by measuring the water activity (aW) or equilibrium relative humidity (ERH) where 1 ERH unit is equal to 100 aW units. Values are given in terms of percentage ERH (0 to 100%) or water activity (0 to 1). A water activity value of 0.8 in a foodstuff will support the growth of pathogens and mould growth can start above 0.65. Typically, most confectionery products are in the range 0.55 to 0.72. The methods of the present invention can be utilised to generate compositions which result in compositions which are within the limits of acceptability and are microbiologically stable. Where the compositions or formulations are to be used for coating ice-cream confections, frozen deserts, the issue of water activity in respect of microbiological spoilage may no longer be as important and consequently higher water activity contents may also be utilised.

Without wishing to be bound by theory, it is believed that all the non-carbohydrate solids are in the fat phase in chocolate formulations prepared according to a method of the present invention which distinguishes the formulations from previously known preparations. It is also believed that it is important for there to be no crystallisation of sugar in the sugar syrup phase of the formulation during preparation.

In the production of chocolate formulations, the formulation is often "tempered" prior to moulding and methods of the present invention may also comprise such a step either prior to the introduction of the concentrated sugar syrup or after admixing the syrup. Tempering may take place within the temperature ranges stated for the method, preferably tempering takes place at a temperature of from 25°C to 35°C, suitably at 30°C.

According to a second aspect of the invention there is provided an edible confectionery composition comprising a water-in-oil phase chocolate formulation, the formulation comprising a chocolate fat phase with a fat content of at least 25% w/w and a sugar syrup dispersed in the fat phase in the form of droplets, the syrup having a solids content of at least 70% w/w and wherein the final moisture content of the formulation is from 8% to 20% w/w. The confectionery composition may be for sale under ambient or low temperature and may additionally comprise cocoa powder, cocoa liquor, cocoa butter, milk solids non-fat, milk fat, vegetable fat, sugar, or one or more of sweeteners, flavourings, colourings, aromas, vitamins, dietary supplements or emulsifiers. The composition may be a frozen or chilled product. Compositions prepared by these methods may be in any form of conventional edible confectionery composition, e.g. chocolate bars, or may be used to prepare compound products e.g. chocolate-enrobed confectionery or ice-cream, truffles. Chocolate-enrobed confectionery products may comprise any suitable confectionery product.

According to a third aspect of the present invention there is provided an edible confectionery composition comprising a chocolate formulation preparable by a method in accordance with the first aspect of the invention. As described previously, the end-product may be for sale under ambient or low temperature. The confectionery composition may comprise cocoa powder, cocoa liquor, cocoa butter, milk solids non-fat, milk fat, vegetable fat, sugar, or one or more of sweeteners, flavourings, colourings or emulsifiers. Such compositions prepared by these methods may be in any form of conventional edible confectionery composition, e.g. chocolate bars, or may be used to prepare compound products e.g. chocolate-enrobed confectionery or ice-cream, truffles etc.

Where a chocolate formulation is used to enrobe a confectionery composition, the enrobing layer may comprise typically of from 25% to 75% by weight of the total composition and be present in a layer of at least 0.5mm, preferably in a layer of from 1mm to 10mm.

According to a fourth aspect of the present invention there is provided the use of a chocolate formulation prepared by a method as defined previously in the preparation of an edible confectionery composition. The edible confectionery composition may be a frozen or chilled product. The chocolate formulation may be used to enrobe a confectionery composition.

Preferred features of the second and subsequent aspects of the present invention are as for the first aspect *mutatis mutandis*.

The present invention will now be further described with reference to the following examples which are provided for the purposes of illustration only.

### Example 1: Preparation of dark chocolate composition

A chocolate fat phase containing cocoa liquor and cocoa butter was prepared and maintained at a temperature of 45°C. Whilst stirring the fat phase gently by hand an equal weight of a syrup is added which contains 80% w/v of invert sugar solids also at 45°C. The syrup is dispersed into the fat phase in the form of very small droplets, which remain stable during subsequent handling of the material. The material may be used directly without tempering for the coating (enrobing) if ice-cream bars or shapes. The formulation prepared according to this example contained 10% w/w water.

### Example 2: Preparation of milk chocolate composition

A milk chocolate formulation containing approximately 12% cocoa liquor, 21% milk solids non-fat, 5% milk fat, 17% cocoa butter and 45% sucrose was prepared. Whilst maintaining the formulation at 45°C and stirring slowly, an equal weight of syrup containing 95DE (dextrose equivalent) glucose syrup solids at 80% w/v is added. The final composition contained 10% w/w of water.

### Example 3: Investigation ERH in dark chocolate prepared from Trimoline™

A dark chocolate was prepared by mixing 31 % w/w cocoa solids with 27% w/w cocoa butter and heating the mixture to 50°C, followed by addition of unheated 42% w/w Trimoline™ (95% invert sugar). After the two parts are thoroughly mixed into each other the dark chocolate was tempered as for a conventional chocolate. The final product set at the same speed as standard chocolate and contains 8.5% w/w moisture. The ERH measured for the chocolate was 58% which was very favourable when compared to an ordinary mixture of water and chocolate with 7% water w/w which had an ERH of 82.3%.

### Example 4: Comparison of various sugar syrups in dark, milk and white chocolate

Formulations of milk chocolate were prepared using various different sugar syrups and the results are shown in Table 1. The following symbols "a" to "f "are used in Table 1 in connection with the solids content of the sugar syrups:
Invert Sugar Syrup^{a} - 82% solids w/w
95DE Glucose Syrup^{b} - 80% solids w/w
69DE Glucose Syrup^{c} - 80% solids w/w
Golden Syrup^{d} - 82% solids w/w
Inulin Syrup^{e} - 80% solids w/w
Polydextrose Syrup^{f} - 75% solids w/w

The inulin syrup used was Fructafit HD™ which contains 90% inulin.

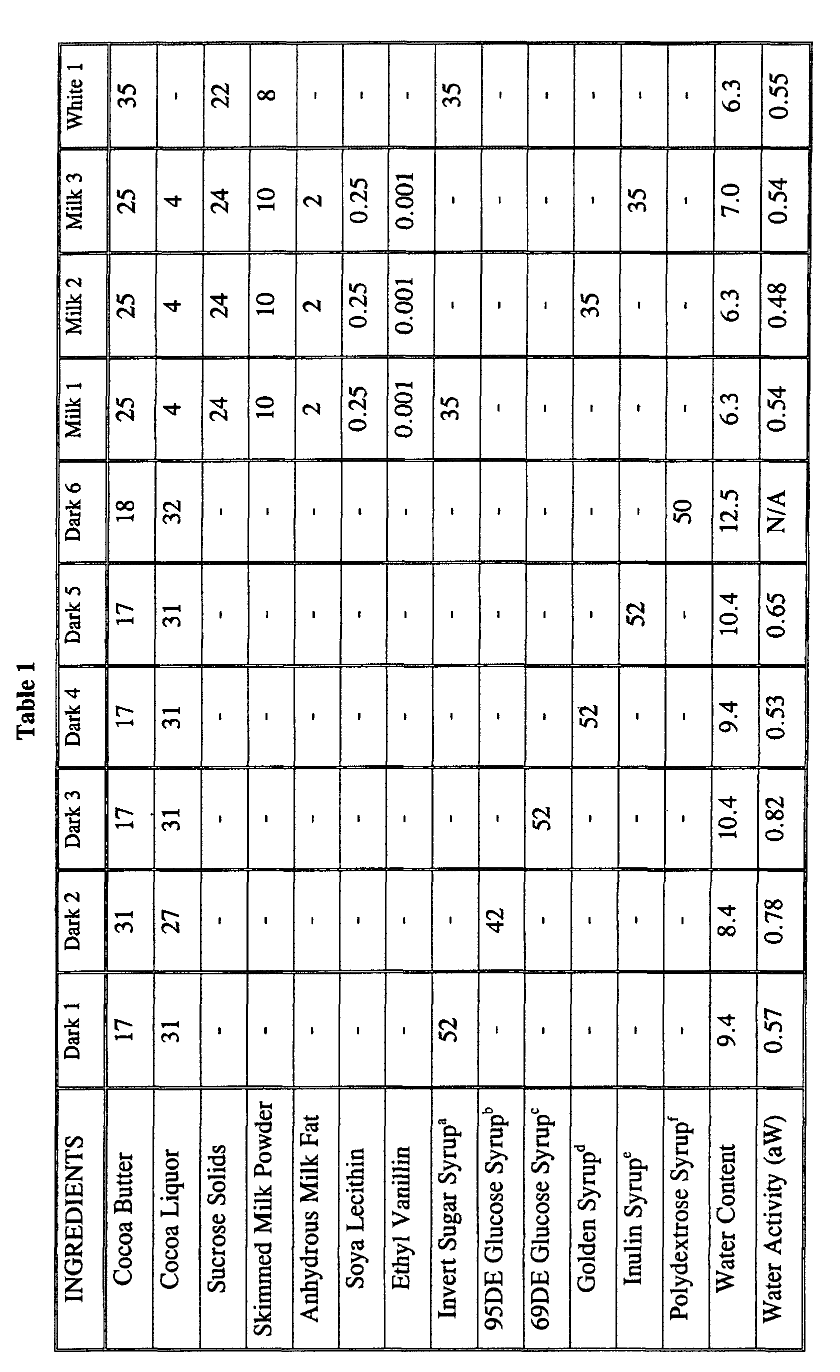

## Claims

1. A method for the preparation of a water-in-oil phase chocolate formulation, the method comprising the step of admixing a concentrated sugar syrup to a chocolate fat phase with a fat content of at least 25% w/w under conditions of low shear at a temperature of from 30°C to 55°C wherein the viscosity of the sugar syrup is from 500 cps to 140,000cps measured at 20°C with a Brookfield Digital Viscometer, and the sugar syrup having a solids content of at least 70% w/w and wherein the final moisture content of the chocolate formulation is from 8% to 20% w/w.

2. A method as claimed in claim 1, in which the total fat content is from 25% to 45% w/w.

3. A method as claimed in any one of claims 1 or 2, in which the sugar syrup has a solids content of 70% to 85% w/w.

4. A method as claimed in any preceding claim which comprises the additional step of tempering the chocolate at a temperature of from 25°C to 35°C.

5. An edible confectionery composition comprising a water-in-oil phase chocolate formulation, the formulation comprising a chocolate fat phase with a fat content of at least 25% w/w and a sugar syrup dispersed in the fat phase in the form of droplets, the syrup having a solids content of at least 70% w/w and wherein the final moisture content of the formulation is from 8% to 20% w/w.

6. An edible confectionery composition as claimed in claim 5, in which the composition is a frozen or chilled product.

7. The use of a chocolate formulation prepared by a method as defined in any one of claims 1 to 4 in the preparation of an edible confectionery composition.

8. The use as claimed in claim 7, in which the edible confectionery composition is a frozen or chilled product.

9. The use as claimed in claim 7 or in claim 8, in which the chocolate formulation is used to enrobe a confectionery composition.

## Patentansprüche

1. Verfahren zur Herstellung einer Wasser-in-Öl-Phasen-Schokoladenformulierung, wobei das Verfahren das Zumischen eines konzentrierten Zuckersirups zu einer Schokoladenfettphase mit einem Fettgehalt von wenigstens 25 Gew.-% unter Bedingungen niedriger Scherung bei einer Temperatur von 30°C bis 55°C umfaßt, wobei die Viskosität des Zuckersirups von 500 cps bis 140.000 cps beträgt, gemessen bei 20°C mit einem Brookfield Digital Viscometer, und der Zuckersirup eine Trockenmasse von wenigstens 70 Gew.-% hat und wobei der Endfeuchtigkeitsgehalt der Schokoladenformulierung von 8 bis 20 Gew.% beträgt.

2. Verfahren nach Anspruch 1, **dadurch gekennzeichnet, daß** der Gesamtfettgehalt von 25 bis 45 Gew.-% beträgt.

3. Verfahren nach einem der Ansprüche 1 oder 2, **dadurch gekennzeichnet, daß** der Zuckersirup eine Trockenmasse von 70 bis 85 Gew.-% hat.

4. Verfahren nach einem der vorangehenden Ansprüche, das den zusätzlichen Schritt des Temperns der Schokolade bei einer Temperatur von 25°C bis 35°C umfaßt.

5. Eßbare Süßwarenzusammensetzung, die eine Wasser-in-Öl-Phasen-Schokoladenformulierung umfaßt, wobei die Formulierung eine Schokoladenfettphase mit einem Fettgehalt von wenigstens 25 Gew.-% und einen Zuckersirup, der in der Fettphase in der Form von Tröpfchen dispergiert ist, umfaßt, wobei der Sirup eine Trockenmasse von wenigstens 70 Gew.-% hat und wobei der Endfeuchtigkeitsgehalt der Formulierung von 8 bis 20 Gew.-% beträgt.

6. Eßbare Süßwarenzusammensetzung nach Anspruch 5, **dadurch gekennzeichnet, daß** die Zusammensetzung ein gefrorenes oder gekühltes Produkt ist.

7. Verwendung einer Schokoladenformulierung, hergestellt mit einem Verfahren, wie definiert in einem der Ansprüche 1 bis 4, zur Herstellung einer eßbaren Süßwarenzusammensetzung.

8. Verwendung nach Anspruch 7, **dadurch gekennzeichnet, daß** die eßbare Süßwarenzusammensetzung ein gefrorenes oder gekühltes Produkt ist.

9. Verwendung nach Anspruch 7 oder Anspruch 8, **dadurch gekennzeichnet, daß** die Schokoladenformulierung verwendet wird, um eine Süßwarenzusammensetzung zu umhüllen.

## Revendications

1. Un procédé de préparation d'une formulation de chocolat en phase eau dans huile, le procédé comprenant l'étape consistant à mélanger un sirop concentré de sucre à une phase grasse du chocolat avec une teneur en matières grasses d'au moins 25 % en poids dans des conditions de faible contrainte de cisaillement à une température de 30 °C à 55 °C, dans lequel la viscosité du sirop de sucre est de 500 cP à 140 000 cP mesurée à 20 °C avec un viscosimètre numérique Brookfield, et le sirop de sucre ayant une teneur en matière sèche d'au moins 70 % en poids et dans lequel la teneur en humidité finale de la formulation de chocolat est de 8 % à 20 % en poids.

2. Un procédé selon la revendication 1, dans lequel la teneur en matières grasses totale est de 25 % à 45 % en poids.

3. Un procédé selon l'une quelconque des revendications 1 ou 2, dans lequel le sirop de sucre a une teneur en matière sèche de 70 % à 85 % en poids.

4. Un procédé selon l'une quelconque des revendications précédentes, qui comprend l'étape supplémentaire de tempérage du chocolat à une température de 25 °C à 35 °C.

5. Une composition de confiserie comestible comprenant une formulation de chocolat en phase eau dans huile, la formulation comprenant une phase grasse du chocolat avec une teneur en matières grasses d'au moins 25 % en poids et un sirop de sucre dispersé dans la phase grasse sous la forme de gouttelettes, le sirop ayant une teneur en matière sèche d'au moins 70 % en poids et dans lequel la teneur en humidité finale de la formulation est de 8 % à 20 % en poids.

6. Une composition de confiserie comestible selon la revendication 5, dans laquelle la composition est un produit congelé ou réfrigéré.

7. L'utilisation d'une formulation de chocolat préparée par un procédé tel que défini dans l'une quelconque des revendications 1 à 4, dans la préparation d'une composition de confiserie comestible.

8. L'utilisation selon la revendication 7, dans laquelle la composition de confiserie comestible est un produit congelé ou réfrigéré.

9. L'utilisation selon la revendication 7 ou la revendication 8, dans laquelle la formulation de chocolat est utilisée pour enrober une composition de confiserie.
